# EUROPÄISCHE PATENTSCHRIFT

(11) **EP 4 084 939 B1**
(45) Veröffentlichungstag und Bekanntmachung des Hinweises auf die Patenterteilung: **12.03.2025**
(21) Anmeldenummer: 21700153.6
(22) Anmeldetag: 04.01.2021
(51) Int. Cl.: B25J 9/16, B25J 13/08, B25J 19/02

(54) **SENSORVORRICHTUNG, GREIFVORRICHTUNG, VERFAHREN UND STEUEREINHEIT FÜR EINE GREIFVORRICHTUNG**
SENSOR DEVICE, GRIPPING DEVICE, METHOD AND CONTROL UNIT FOR A GRIPPING DEVICE
DISPOSITIF DE DÉTECTION, DISPOSITIF DE PRÉHENSION, PROCÉDÉ ET UNITÉ DE COMMANDE POUR UN DISPOSITIF DE PRÉHENSION

(30) Priorität: 30.12.2019 DE 102019220598
(43) Veröffentlichungstag der Anmeldung: 09.11.2022
(73) Patentinhaber: Robert Bosch GmbH, 70442 Stuttgart (DE)
(72) Erfinder: LINDNER, Peter, 74372 Sersheim (DE)
(86) Internationale Anmeldenummer: PCT/EP2021/050009
(87) Internationale Veröffentlichungsnummer: WO 2021/136845

(56) Entgegenhaltungen:
- DE-A1- 102014 221 294
- DE-A1- 102015 208 702
- US-A1- 2008 174 321
- US-A1- 2009 285 664
- US-A1- 2013 325 181
- US-A1- 2017 334 070

## Beschreibung

Die Erfindung geht aus von einer Sensorvorrichtung, insbesondere für eine Greifvorrichtung oder einen Roboter, von einer Greifvorrichtung, insbesondere für einen Roboter, und einer Verwendung der Sensorvorrichtung. Weiterhin betrifft die Erfindung ein Verfahren und eine Steuereinheit zum Ausrichten einer Greifvorrichtung und Beaufschlagen der Greifvorrichtung mit einer Kraft.

### Stand der Technik

In der Robotik werden von einem Roboter zu greifende oder auch aufzunehmende Teile oder Objekte in der Regel optisch erfasst, um eine Relativposition zwischen Roboter und Objekt zu ermitteln. Hierbei kann es zu Situationen kommen, bei denen ein Teil des Roboters das zu greifende Objekt verdeckt. Weiterhin sind Roboter bekannt, welche mit Kraftmesssensoren ausgestattet sind, um die auf ein zu greifendes Objekt wirkende Kraft messen und davon abhängig einstellen zu können.

Aus der DE 10 2014 221 294 A1 ist eine Sensorvorrichtung offenbart, welche wenigstens ein Sensorfeld aufweist, welches mindestens zwei Drucksensoren umfasst, wobei die Sensorvorrichtung ferner mit einer über dem mindestens einem Sensorfeld angeordneten Elastomerschicht versehen ist. Die US 2008/0174321 A1 betrifft einen kapazitiven Sensor zur taktilen Detektion und Abstandsdetektion. Aus der US 2017/334070 A1 ist eine sensorisierte Abdeckung bekannt, die zum Abdecken mindestens eines Teils einer beweglichen Struktur einer automatisierten Vorrichtung verwendet wird, wobei die sensorisierte Abdeckung Kontaktsensormittel und Näherungssensormittel umfasst. Die US 2009/285664 A1 betrifft einen Roboter, eine Roboterhand und eine Verfahren zum Steuern der Roboterhand. Aus der US 2013/325181 A1 sind optische Abstandssensoren bekannt, die zum Annähern, Greifen und Manipulieren eingesetzt werden. Die DE 10 2015 208 702 A1 betrifft eine Kollisionserkennungseinrichtung für ein medizinisches , Gerät.

### Offenbarung der Erfindung

Vor diesem Hintergrund wird mit dem hier vorgestellten Ansatz eine Sensorvorrichtung, insbesondere für eine Greifvorrichtung oder einen Roboter, offenbart, wobei die Sensorvorrichtung einen ersten, insbesondere taktilen, Sensor umfasst, der eingerichtet ist, eine zwischen der Sensorvorrichtung und einem Objekt wirkende Kraft zu bestimmen. Weiterhin umfasst die Sensorvorrichtung einen zweiten, insbesondere kapazitiven, Sensor, der eingerichtet ist, eine Entfernung zwischen der Sensorvorrichtung und dem Objekt zu bestimmen.

Unter einem Objekt kann hierbei ein Gegenstand verstanden werden, welcher sich in einer Umgebung der Sensorvorrichtung befindet. Unter einem Objekt kann weiterhin ein Mensch oder ein Tier, oder ein Körperteil eines Menschen oder eines Tieres verstanden werden.

### Vorteile der Erfindung

Durch die Sensorvorrichtung kann in vorteilhafter Weise sowohl eine Entfernung zu einem Objekt bzw. eine Annäherung des Objekts an die Sensorvorrichtung sowie eine zwischen der Sensorvorrichtung und dem Objekt wirkende Kraft bestimmt werden, sobald die Sensorvorrichtung mit dem Objekt in mechanischen Kontakt getreten ist. Durch diese doppelte Funktionalität kann ferner ein Bauraum der Sensorvorrichtung besonders klein ausgeführt werden.

Weitere Vorteile ergeben sich aus den Unteransprüchen.

In einer bevorzugten Ausführungsform ist vorgesehen, dass wenigstens der erste Sensor und/oder der zweite Sensor im Wesentlichen flächig, insbesondere als flexibles Mehrschichtsystem, ausgestaltet und übereinander angeordnet ist/sind. Hierdurch lassen sich große Sensorflächen realisieren, die, insbesondere durch ihre geringe Schichtdicke, flexibel sind und dadurch auch auf unebenen Oberflächen an- oder aufgebracht werden können.

In einer weiteren bevorzugten Ausführungsform ist vorgesehen, dass der erste Sensor und der zweite Sensor wenigstens ein gemeinsames Sensorelement aufweisen. Hierdurch lassen sich in effizienter Weise Material und/oder Bauraum einsparen.

Erfindungsgemäß ist vorgesehen, dass der erste Sensor eine erste Schicht und eine zweite Schicht aus einem leitfähigen Material aufweisen und dass zwischen der ersten Schicht und der zweiten Schicht eine dritte Schicht aus einem piezoelektrischen Material angeordnet ist. Die dritte Schicht dient auch als Isolationsschicht zwischen der ersten Schicht und der dritten Schicht. Hierdurch kann in einfacher Weise ein taktiler Sensor realisiert werden. Die erste Schicht und die zweite Schicht können beispielsweise Metall, insbesondere Kupfer, aufweisen und fungieren hierbei als Elektroden des ersten Sensors. Durch einen geeigneten elektrischen Anschluss der Elektroden können zwischen einem Objekt und dem ersten Sensor wirkende Kräfte gemessen werden.

Insbesondere ist es von Vorteil, wenn die dritte Schicht den piezoelektrischen Kunststoff Polyvinylidenfluorid (PVDF) aufweist. Indem die Sensorvorrichtung, und damit auch der erste Sensor, gedehnt oder zusammengedrückt werden, wird auch die dritte Schicht aus PVDF gedehnt oder zusammengedrückt. Hierdurch verschieben sich elektrische Ladungen innerhalb der dritten Schicht, welche über die erste Schicht und die dritte Schicht abgegriffen, an eine externe Auswerteeinheit geleitet und dort ausgewertet werden können. Durch den Einsatz von PVDF lassen sich schon bei Dehnungen oder Stauchungen im Mikrometerbereich Spannungen im Bereich von einigen Volt detektieren. Insbesondere eignet sich ein Sensor mit einer dritten Schicht aus PVDF zur Ermittlung einer Änderung einer Dehnung oder Stauchung bzw. einer Änderung einer auf den ersten Sensor wirkenden Kraft.

Erfindungsgemäß ist vorgesehen, dass der zweite Sensor eine als vierte bezeichnete Schicht aufweist, wobei die vierte Schicht einen ersten Teilbereich und einen dritten Teilbereich aus einem leitfähigen Material und einen zweiten Teilbereich aus einem Dielektrikum umfasst. Der zweite Teilbereich aus dem Dielektrikum kann, insbesondere konzentrisch, zwischen dem ersten und dritten Teilbereich angeordnet sein. Die vierte Schicht kann hierbei eine Schichtdicke, von wenigen Nanometern bis hin zu einigen Hundert Mikrometern oder mehr aufweisen.

Hierdurch lässt sich in einfacher Weise ein kapazitiver Sensor zur Ermittlung einer Entfernung zwischen dem Objekt und dem Sensor realisieren, wobei der zweite Sensor und der erste kapazitive Sensor in einer integrierten Bauweise als eine Sensorvorrichtung ausgestaltet ist. Der erste Teilbereich und der dritte Teilbereich der vierten Schicht kann ein Metall wie beispielsweise Kupfer oder Aluminium oder einen leitfähigen Kunststoff aufweisen. Der zweite Sensor kann insbesondere ähnlich wie ein Zylinderkondensator aufgebaut und auf dem ersten Sensor angeordnet sein.

In einer weiteren bevorzugten Ausführungsform umfasst die erste Schicht oder die zweite Schicht des ersten Sensors wenigstens bereichsweise den ersten Teilbereich und/oder den dritten Teilbereich der vierten Schicht des zweiten Sensors. Hierdurch kann dieser Teilbereich der vierten Schicht sowohl für den ersten als auch den zweiten Sensor funktional sein. Mit anderen Worten kann dieser Teilbereich der vierten Schicht eine erste Elektrode für den zweiten Sensor und wenigstens bereichsweise eine Elektrode für den ersten Sensor darstellen. Hierdurch können der erste Teilbereich und der dritte Teilbereich der vierten Schicht sowie die zum dem Teilbereich komplementäre erste oder zweite Schicht des ersten Sensors geeignet elektrisch kontaktiert werden, um die volle Funktionalität der Sensorvorrichtung zu erhalten.

Es ist weiterhin von Vorteil, wenn der zweite Sensor auf einer dem ersten Sensor abgewandten Seite eine elektrisch isolierende Folie aufweist. Hierdurch wird einerseits die Sensorvorrichtung geschützt und andererseits können auf der elektrisch isolierenden Folie elektrische Leitungen für die Kontaktierung der darunterliegenden Sensoren bereitgestellt werden.

Die zuvor genannten Vorteile gelten in entsprechender Weise auch für eine

Greifvorrichtung, insbesondere für einen Roboter, mit einer Sensorvorrichtung nach einer der zuvor genannten Ausführungsformen. Eine solche Greifvorrichtung kann in vorteilhafter Weise sowohl eine Entfernung bzw. Annäherung an ein Objekt als auch nach erfolgtem In-Kontakt-Treten mit dem Objekt eine zwischen dem Objekt und der Sensorvorrichtung bzw. Greifvorrichtung wirkende Kraft ermitteln.

In einer bevorzugten Ausführungsform ist vorgesehen, dass die Greifvorrichtung wenigstens zwei relativ zueinander bewegliche Greifelemente und wenigstens zwei Sensorvorrichtungen nach einer der zuvor beschriebenen Ausführungsformen aufweist. Weiterhin ist vorgesehen, dass auf jedem Greifelement wenigstens eine Sensorvorrichtung derart angeordnet ist, dass die Sensorvorrichtung bei einem Greifvorgang in Richtung des zu greifenden Objekts ausgerichtet ist. Hierdurch kann ein zu greifendes Objekt von der Greifvorrichtung bzw. von dem Roboter besonders behutsam gegriffen werden. Denn durch die Entfernungsbestimmung zwischen dem zu greifenden Objekt und den einzelnen Greifelementen kann die Greifvorrichtung die Greifelemente in gleichmäßigem Abstand zu dem Objekt ausrichten, wodurch das In-Kontakt-Treten des Objekts mit den Greifelementen und das nachfolgende Applizieren einer Kraft durch die Greifelemente auf das Objekt besonders behutsam erfolgt.

Die zuvor genannten Vorteile gelten in entsprechender Weise auch für ein Verfahren zum Ausrichten einer Greifvorrichtung gemäß einer der zuvor beschriebenen Ausführungsformen, zu einem zu greifenden Objekt und Beaufschlagen der Greifvorrichtung mit einer Kraft. Das Verfahren weist einen Schritt des Ausrichtens einer auf einem Greifelement der Greifvorrichtung angeordneten Sensorvorrichtung in Richtung des zu greifenden Objekts auf. Weiterhin weist das Verfahren einen Schritt des Erfassens einer ersten Entfernung zwischen der ersten Sensorvorrichtung und dem Objekt auf. Des Weiteren weist das Verfahren einen Schritt des Annäherns des Greifelements an das Objekt in Abhängigkeit von der erfassten ersten Entfernung auf, wobei das Annähern derart erfolgt, dass das Greifelement mit dem Objekt in Kontakt tritt. Das Verfahren weist weiterhin einen Schritt des Anpassens der von dem Greifelement auf das Objekt wirkenden Kraft in Abhängigkeit von Messdaten des ersten Sensors der Sensorvorrichtung auf.

In einer weiteren bevorzugten Ausführungsform ist vorgesehen, dass im Schritt des Ausrichtens wenigstens eine zweite, auf wenigstens einem zweiten Greifelement der Greifvorrichtung angeordnete Sensorvorrichtung in Richtung des Objekts ausgerichtet wird. Weiterhin ist vorgesehen, dass im Schritt des Erfassens eine zweite Entfernung zwischen der zweiten Sensorvorrichtung und dem Objekt erfasst wird. Ferner ist vorgesehen, dass im Schritt des Annäherns die wenigstens zwei Greifelemente an das Objekt in Abhängigkeit von der erfassten ersten Entfernung und der erfassten zweiten Entfernung derart angenähert werden, dass die zwei Greifelemente im Wesentlichen zeitgleich mit dem Objekt in Kontakt treten. Im Schritt des Anpassens ist ferner vorgesehen, dass die von den zwei Greifelementen auf das Objekt wirkende Kraft zusätzlich in Abhängigkeit von Messdaten des ersten Sensors der zweiten Sensorvorrichtung angepasst werden. Hierdurch wird gewährleistet, dass die zwei Greifelemente im Wesentlichen zum gleichen Zeitpunkt mit dem Objekt in Kontakt treten bzw. das Objekt berühren und aufnehmen. Ferner wird vorteilhaft erreicht, dass die zwischen jedem Greifelement und dem Objekt wirkenden Kräfte gemessen werden und davon abhängig die durch das Greifelement auf das Objekt zu applizierende Kraft eingestellt werden kann. Dies ist insbesondere für Objekte von Vorteil, die eine inhomogene Materialzusammensetzung, Dichte und/oder Beschaffenheit aufweisen und daher Volumen und/oder Oberflächenbereiche aufweisen, welche eine unterschiedliche Festigkeit aufweisen.

Die zuvor genannten Vorteile gelten in entsprechender Weise für eine Steuereinheit für eine Greifvorrichtung mit Mitteln, die eingerichtet sind, das Verfahren gemäß den zuvor beschriebenen Ausführungsformen durchzuführen.

Hierbei kann das Verfahren beispielsweise in Software oder Hardware oder in einer Mischform aus Software und Hardware in der Steuereinheit implementiert sein. Hierzu kann die Steuereinheit zumindest eine Auswerteeinheit zum Verarbeiten von Signalen oder Daten zumindest eine Speichereinheit zum Speichern von Signalen oder Daten, zumindest eine Schnittstelle zu einer Erfassungseinheit oder einem Aktor zum Einlesen von Sensorsignalen bzw. Kenngrößen von der Erfassungseinheit oder zum Ausgeben von Steuersignalen an den Aktor und/oder zumindest eine Kommunikationsschnittstelle zum Einlesen oder Ausgeben von Daten aufweisen, die in einem Kommunikationsprotokoll eingebettet sind. Die Auswerteeinheit kann beispielsweise ein Signalprozessor, ein Mikrocontroller oder dergleichen sein, wobei die Speichereinheit ein Flashspeicher, ein Eprom-Speicher oder eine magnetische Speichereinheit sein kann. Die Kommunikationsschnittstelle kann ausgebildet sein, um Daten drahtlos und/oder leitungsgebunden einzulesen oder auszugeben. Eine Kommunikationsschnittstelle, die leitungsgebundene Daten einlesen oder ausgeben kann, kann diese Daten beispielsweise elektrisch oder optisch aus einer entsprechenden Datenübertragungsleitung einlesen oder in eine entsprechende Datenübertragungsleitung ausgeben.

Gegenstand der Erfindung ist ferner eine Verwendung einer Sensorvorrichtung nach einer der zuvor beschriebenen Ausführungsformen als taktiler Entfernungssensor im oder an einer Sensorhaut in der Robotik. Unter einer Sensorhaut kann hierbei wenigstens ein Bereich einer Oberfläche eines Roboters oder eines Teils eines Roboters, wie beispielsweise eines Greifarms, verstanden werden, durch welchen der Roboter Informationen über eine direkte Umgebung des Roboters, insbesondere über Abstände bzw. Entfernungen zu Objekten in der Nähe des Roboters, erhalten kann.

### Kurze Beschreibung der Zeichnungen

Ausführungsbeispiele der Erfindung sind in den Zeichnungen schematisch dargestellt und in der nachfolgenden Beschreibung näher erläutert. Für die in den Figuren dargestellten und ähnlich wirkenden Elemente werden gleiche Bezugszeichen verwendet, wobei auf eine wiederhole Beschreibung der Elemente verzichtet wird.

Es zeigen:
Fig. 1 Eine schematische Darstellung einer Sensorvorrichtung gemäß einem Ausführungsbeispiel;
Fig. 2 Eine schematische Darstellung einer Greifvorrichtung und eines zu greifenden Objekts gem. einem Ausführungsbeispiel;
Fig. 3 Zeigt eine schematische Darstellung einer Steuereinheit für eine Greifvorrichtung gem. einem Ausführungsbeispiel;
Fig. 4 Ein Ablaufdiagram eines Verfahrens zum Ausrichten einer Greifvorrichtung zu einem zu greifenden Objekt und Beaufschlagen der Greifvorrichtung mit einer Kraft gem. einem Ausführungsbeispiel.

Wie bereits vorstehend ausgeführt, wird mit der vorliegenden Erfindung eine Sensorvorrichtung, eine Greifvorrichtung, ein Verfahren und eine Steuereinheit für eine Greifvorrichtung beschrieben, die es ermöglichen, die Greifvorrichtung auf das zu greifende Objekt ohne Sichtkontakt mittels optischer Systeme auszurichten, und die bei einem In-Kontakt-Treten der Greifvorrichtung mit dem Objekt wirkende Kraft zwischen der Greifvorrichtung und dem Objekt zu ermitteln und gezielt einzustellen.

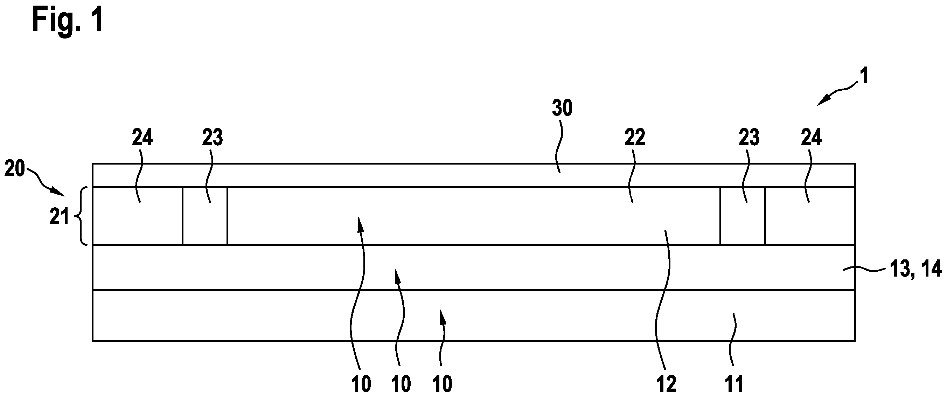

In Fig. 1 ist eine Sensorvorrichtung 1 in einer Seitenansicht schematisch dargestellt. Die Sensoreinrichtung 1 weist einen ersten Sensor 10 auf, welcher als taktiler Sensor ausgebildet ist. Mittels des ersten Sensors 10 kann zwischen der Sensorvorrichtung 1 und einem Objekt eine zwischen der Sensorvorrichtung 1 und dem Objekt wirkende Kraft ermittelt werden. Ferner weist die Sensorvorrichtung 1 einen zweiten Sensor 20 auf, welcher als kapazitiver Sensor ausgebildet ist. Mittels des zweiten Sensors 20 kann eine Entfernung bzw. eine Annäherung zwischen dem Objekt und der Sensorvorrichtung 1 ermittelt bzw. detektiert werden.

Der erste Sensor 10 ist als Mehrschichtsystem ausgebildet. Der erste Sensor 10 weist eine erste Schicht 11 und eine zweite Schicht 12 auf, welche aus einem leitfähigen Material gefertigt sind. Das leitfähige Material kann beispielsweise Kupfer oder Aluminium aufweisen. Zwischen der ersten Schicht 11 und der zweiten Schicht 12 ist eine dritte Schicht 13 aus einem piezoelektrischen Material angeordnet. Das piezoelektrische Material isoliert die erste Schicht 11 und die zweite Schicht 12 elektrisch voneinander. Bevorzugt kann die dritte Schicht 13 Polyvinylidenfluorid (PVDF) 14 aufweisen. Die erste Schicht 11, die zweite Schicht 12 und die dritte Schicht 13 weisen eine im Vergleich zu ihrer Flächenausdehnung geringe Schichtdicke im Bereich von wenigen Nanometern bis zu einigen Hundert Mikrometern oder mehr auf, sodass der erste Sensor 10 als flexibler Multilagensensor ausgebildet ist.

Der zweite Sensor 20 ist direkt an dem ersten Sensor 10 angeordnet. Der zweite Sensor 20 weist eine vierte Schicht 21 auf, welche als Lage über der dritten Schicht 13 des ersten Sensors 10 wenigstens bereichsweise angeordnet ist. Die vierte Schicht 21 weist einen ersten Teilbereich 22 und einen dritten Teilbereich 24 auf, welche aus einem leitfähigen Material wie beispielsweise Kupfer oder Aluminium gefertigt sind.

Der erste Teilbereich 22 und der dritte Teilbereich 24 sind durch einen zweiten Teilbereich 23 elektrisch voneinander getrennt. Der zweite Teilbereich 23 kann hierbei ein Dielektrikum aufweisen. Der dritte Teilbereich 24 kann konzentrisch um den zweiten Teilbereich 23 angeordnet sein, welcher wiederum konzentrisch um den ersten Teilbereich 22 angeordnet sein kann. In einer solchen Konfiguration kann der zweite Sensor 20 im Wesentlichen als Zylinderkondensator ausgebildet sein.

Hierbei weisen der erste Sensor 10 und der zweite Sensor 20 ein gemeinsames Sensorelement auf. In dem hier dargestellten Ausführungsbeispiel wird das gemeinsame Sensorelement durch den ersten Teilbereich 22 der vierten Schicht 21 gebildet, welcher gleichzeitig auch die zweite Schicht 12 des ersten Sensors 10 wenigstens bereichsweise bildet. Durch diese Konfiguration kann eine flexible, flächige Sensorvorrichtung realisiert werden.

Optional kann vorgesehen sein, dass die Sensorvorrichtung 1 eine elektrisch isolierende Folie 30 aufweist. Die Folie 30 kann hierbei über der vierten Schicht 21, auf einer Seite, welche dem ersten Sensor 10 abgewandt ist, angeordnet sein. Über die Folie 30 können beispielsweise Leiterbahnen zu den einzelnen Teilbereichen bzw. Schichten des ersten Sensors 10 und/oder des zweiten Sensors 20 geführt werden.

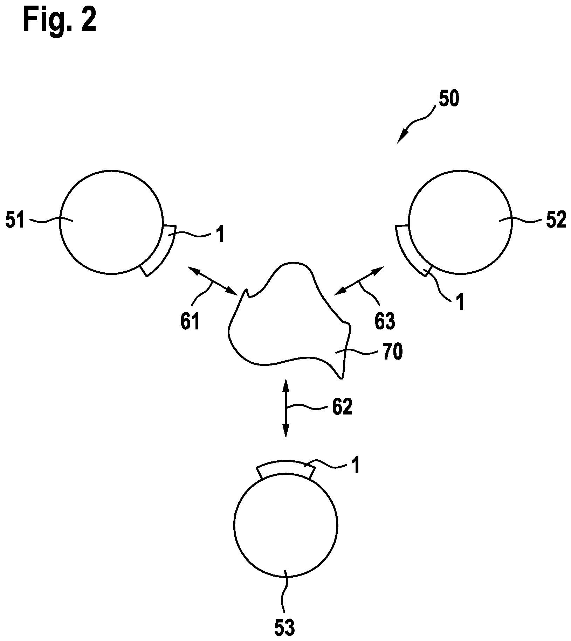

In Fig. 2 ist eine Greifvorrichtung 50 schematisch dargestellt. Die Greifvorrichtung 50 kann einen Roboter oder einen Teil eines Roboters darstellen. Die Greifvorrichtung 50 weist ein erstes Greifelement 51 auf, an welchem eine Sensorvorrichtung 1, insbesondere gemäß einer der zuvor beschriebenen Ausführungsformen, angeordnet ist. Über die Sensorvorrichtung 1 kann eine Entfernung (angedeutet durch den ersten Doppelpfeil 61 zu einem Objekt 70 bestimmt werden.

Das Objekt 70 kann sowohl ein Gegenstand als auch ein Mensch oder ein Tier in der Umgebung der Greifvorrichtung 50 sein. Im Falle einer Annäherung des Objekts 70 an die Greifvorrichtung 50 bzw. an das erste Greifelement 51 kann die Annäherung mittels der Sensorvorrichtung 1 registriert bzw. eine Entfernung zwischen dem Objekt 70 und der Sensorvorrichtung 1 ermittelt werden. Weiterhin kann bei einem In-Kontakt-Treten des Objekts 70 mit der Sensorvorrichtung 1 eine zwischen dem Objekt 70 und der Sensorvorrichtung 1 wirkende Kraft ermittelt werden. Abhängig von dem ermittelten Abstand oder der zwischen dem Objekt 70 und der Sensorvorrichtung 1 wirkenden Kraft, kann die Greifvorrichtung 50 beispielsweise abgeschaltet werden oder das erste Greifelement 51 von dem Objekt 70 wegbewegt werden.

Optional kann die Greifvorrichtung 50 ein zweites Greifelement 52 oder, wie in diesem Ausführungsbeispiel dargestellt, ein drittes Greifelement 53 aufweisen. Das zweite Greifelement 52 und das dritte Greifelement 53 weisen ihrerseits jeweils eine Sensorvorrichtung 1 auf, welche auf das zu greifende Objekt 70 ausrichtbar oder ausgerichtet ist. Jede der Sensorvorrichtungen 1 ist dazu eingerichtet, eine Entfernung (angedeutet durch die weiteren Doppelpfeile 62, 63 zwischen dem zweiten Greifelement 52 und dem Objekt 70 und zwischen dem dritten Greifelement 53 und dem Objekt 70 zu bestimmen. Weiterhin sind die Sensorvorrichtungen 1, welche auf dem zweiten Greifelement 52 und dem dritten Greifelement 53 angeordnet sind, dazu eingerichtet, die zwischen dem Objekt 70 und dem zweiten Greifelement 52, bzw. dem dritten Greifelement 53 wirkenden Kräfte zu ermitteln.

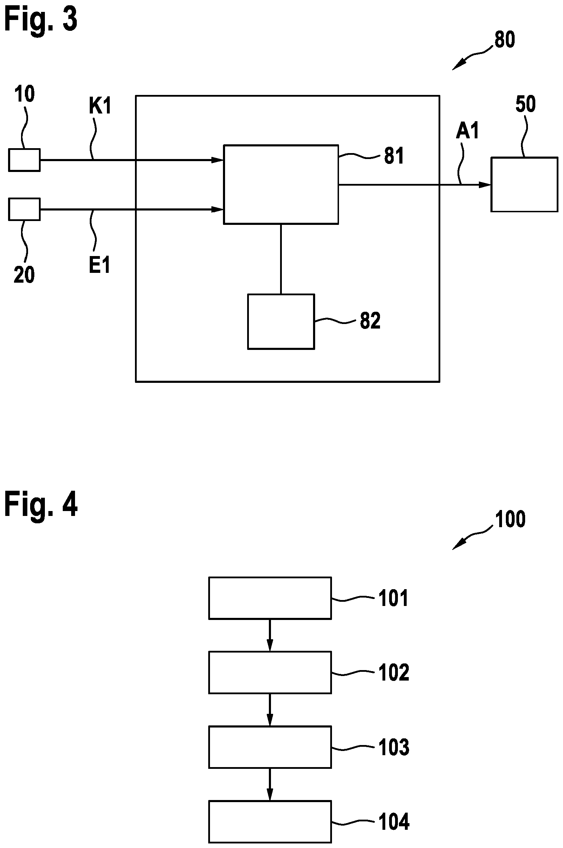

In Fig. 3 ist eine schematische Darstellung einer Steuereinheit 80 gezeigt, welche ein in Fig. 4 nachfolgend beschriebenes Verfahren zum Betreiben der Greifvorrichtung 50 durchführen kann. Die Steuereinheit 80 weist eine Auswerteeinheit 81 auf, welche mit einer optionalen Speichereinheit 82 signaltechnisch in Verbindung steht. Über eine Eingangsschnittstelle empfängt die Auswerteeinheit 81 von dem zweiten Sensor 20 eine erste Größe E1, welche eine Entfernung zwischen der Sensorvorrichtung 1 und einem, insbesondere zu greifenden, Objekt 70 repräsentiert. Falls, und/oder sobald die Sensorvorrichtung 1 mit dem Objekt 70 in Kontakt tritt, empfängt die Auswerteeinheit 81 von dem zweiten Sensor 20 eine zweite Größe K1, welche eine zwischen dem Objekt 70 und der Sensorvorrichtung 1 wirkende Kraft repräsentiert. Abhängig von dem ermittelten Abstand bzw. der ermittelten Entfernung zwischen dem Objekt 70 und der Sensorvorrichtung 1 und/oder abhängig von der zwischen dem Objekt 70 und der Sensorvorrichtung 1 wirkenden Kraft erzeugt die Auswerteeinheit 81 ein Ansteuersignal A1, welches die Auswerteeinheit 81 über eine Ausgangsschnittstelle an die Greifvorrichtung 50 weitergibt.

In Fig. 4 ist ein Ablaufdiagram eines Verfahrens 100 zum Ausrichten der Greifvorrichtung 50 zu dem zu greifenden Objekt 70 und Beaufschlagen der Greifvorrichtung 50 mit einer Kraft gemäß einem Ausführungsbeispiel dargestellt. Es erfolgt in einem optionalen ersten Schritt 101 ein Ausrichten wenigstens zweier Greifelemente 51, 52 auf die zu greifende Probe 70, derart, dass die auf den Greifelementen 51, 52 angeordneten Sensorvorrichtungen 1 in Richtung der Probe 70 zeigen. Sofern die Greifelemente 51, 52 vollflächig mit Sensorvorrichtungen 1 ausgestattet sind, kann dieses Ausrichten entfallen.

Weiterhin werden in dem Schritt 101 die Greifelemente 51, 52 geschickt zu der zu greifenden Probe 70 positioniert. Insbesondere werden die Entfernungen zwischen den Sensorvorrichtungen 1 der Greifelemente 51, 52 und der zu greifenden Probe ausgemittelt. In dem Fall, dass die zu greifende Probe 70 mittels dreier Greifelemente 51, 52, 53 gegriffen werden soll, werden die Greifelemente 51, 52, 53 im Wesentlichen gleichmäßig um die zu greifende Probe 70 angeordnet.

In einem weiteren Verfahrensschritt 102 erfolgt ein Erfassen der Entfernungen zwischen den Greifelementen 51, 52 und dem zu greifenden Objekt 70. In einem weiteren Verfahrensschritt 103 erfolgt ein Annähern der Greifelemente 51, 52 an die zu greifende Probe 70 in Abhängigkeit von der erfassten Entfernung. Insbesondere erfolgt der Schritt des Annäherns solange, bis die Greifelemente 51, 52 mit dem Objekt 70 in Kontakt treten.

In einem nachfolgenden Verfahrensschritt 104 erfolgt ein Anpassen der zwischen den Greifelementen 51, 52 und der zu greifenden Probe 70 wirkenden Kraft in Abhängigkeit von Messdaten K1 des ersten Sensors 10 der Sensorvorrichtung 1.

Hierbei wird insbesondere geprüft, ob eine bestimmte, insbesondere eine zuvor definierbare, Kraft zwischen den Greifelementen 51, 52 bzw. den darauf angeordneten Sensorvorrichtungen 1 und dem Objekt 70 erreicht ist. Ist dies nicht der Fall, so wird die zwischen den Greifelementen 51, 52 und dem Objekt 70 wirkende Kraft erhöht. Ist die zuvor definierte Kraft erreicht, so kann nachfolgend ein Ausgabesignal an die Greifvorrichtung 50 ausgegeben werden, um eine weitere Beaufschlagung des Objekts 70 mit einer Kraft zu verhindern.

## Patentansprüche

1. Sensorvorrichtung (1), insbesondere für eine Greifvorrichtung (50) oder einen Roboter, aufweisend einen ersten taktilen Sensor (10), der eingerichtet ist, eine zwischen der Sensorvorrichtung (1) und einem Objekt (70) wirkende Kraft zu bestimmen, mit einem zweiten kapazitiven Sensor (20), der eingerichtet ist, eine Entfernung (61, 62, 63) zwischen der Sensorvorrichtung (1) und dem Objekt (70) zu bestimmen, wobei der erste Sensor (10) eine erste Schicht (11) und eine zweite Schicht (12) aus einem leitfähigen Material aufweisen,
wobei der zweite Sensor (20) eine Schicht (21) aufweist, wobei die Schicht (21) einen ersten Teilbereich (22) und einen dritten Teilbereich (24) aus einem leitfähigen Material und einen zweiten Teilbereich (23) aus einem Dielektrikum umfasst, welcher, insbesondere konzentrisch, zwischen dem ersten Teilbereich (22) und dem dritten Teilbereich (24) angeordnet ist,
**dadurch gekennzeichnet, dass**
zwischen der ersten Schicht (11) und der zweiten Schicht (12) des ersten Sensors (10) eine dritte Schicht (13) aus einem piezoelektrischen Material angeordnet ist.

2. Sensorvorrichtung (1) nach Anspruch 1, **dadurch gekennzeichnet, dass** wenigstens der erste Sensor (10) und/oder der zweite Sensor (20) im Wesentlichen flächig, insbesondere als flexibles Mehrschichtsystem, ausgestaltet ist/sind und übereinander angeordnet sind.

3. Sensorvorrichtung (1) nach Anspruch 1 oder 2, **dadurch gekennzeichnet, dass** der erste Sensor (10) und der zweite Sensor (20) wenigstens ein gemeinsames Sensorelement aufweisen.

4. Sensorvorrichtung (1) nach Anspruch 1, **dadurch gekennzeichnet, dass** die dritte Schicht (13) Polyvinylidenfluorid (14) aufweist.

5. Sensorvorrichtung (1) nach einem der vorhergehenden Ansprüche, **dadurch gekennzeichnet, dass** die erste Schicht (11) oder die zweite Schicht (12) des ersten Sensors (10) wenigstens bereichsweise den ersten Teilbereich (22) und/oder den dritten Teilbereich (24) der Schicht des zweiten Sensors (20) umfasst.

6. Sensorvorrichtung (1) nach Anspruch 2, **dadurch gekennzeichnet, dass** der zweite Sensor (20) auf einer dem ersten Sensor (10) abgewandten Seite eine elektrisch isolierende Folie (30) aufweist.

7. Greifvorrichtung (50), insbesondere für einen Roboter, mit einer Sensorvorrichtung (1) nach einem der vorhergehenden Ansprüche.

8. Greifvorrichtung (50) nach Anspruch 7, **dadurch gekennzeichnet, dass** die Greifvorrichtung (50) wenigstens zwei relativ zueinander bewegliche Greifelemente (51, 52, 53) und wenigstens zwei Sensorvorrichtungen (1) nach einem der Ansprüche 1 bis 6 aufweist, wobei auf jedem Greifelement (51, 52, 53) wenigstens eine Sensorvorrichtung (1) derart angeordnet ist, dass die Sensorvorrichtung (1) bei einem Greifvorgang in Richtung des zu greifenden Objekts (70) ausgerichtet ist.

9. Verfahren (100) zum Ausrichten einer Greifvorrichtung (50) gemäß Anspruch 7 oder 8, zu einem zu greifenden Objekt (70) und Beaufschlagen der Greifvorrichtung (50) mit einer Kraft, mit den Schritten:
- Ausrichten (101) einer auf einem Greifelement (51) der Greifvorrichtung (50) angeordneten ersten Sensorvorrichtung (1) in Richtung des zu greifenden Objekts (70);
- Erfassen (102) einer ersten Entfernung (61) zwischen der ersten Sensorvorrichtung (1) und dem Objekt mit der ersten Sensorvorrichtung (1);
- Annähern (103) des Greifelements (51) an das Objekt (70) in Abhängigkeit von der erfassten ersten Entfernung (61) derart, dass das Greifelement (51) mit dem Objekt (70) in Kontakt tritt;
- Anpassen (104) der von dem Greifelement auf das Objekt wirkenden Kraft in Abhängigkeit von Messdaten (K1) eines ersten Sensors (10) der Sensorvorrichtung (1).

10. Verfahren (100) nach Anspruch 9 **dadurch gekennzeichnet, dass** im Schritt des Ausrichtens (101) wenigstens eine zweite, auf wenigstens einem zweiten Greifelement (52, 53) der Greifvorrichtung (50) angeordnete Sensorvorrichtung (1) in Richtung des Objekts (70) ausgerichtet wird; im Schritt des Erfassens (102) wenigstens eine zweite Entfernung (62, 63) zwischen der zweiten Sensorvorrichtung (1) und dem Objekt (70) erfasst wird; im Schritt des Annäherns (103) die wenigstens zwei Greifelemente (51, 52, 53) an das Objekt (70) in Abhängigkeit von der erfassten ersten Entfernung (61) und der erfassten zweiten Entfernung (62, 63) derart angenähert werden, dass die zwei Greifelemente (51, 52, 53) im Wesentlichen zeitgleich mit dem Objekt (70) in Kontakt treten; und im Schritt des Anpassens (104) die von den zwei Greifelementen (51, 52, 53) auf das Objekt (70) wirkende Kraft in Abhängigkeit von Messdaten (K1) des jeweils ersten Sensors (10) der zwei Sensorvorrichtungen (1) angepasst wird.

11. Steuereinheit (80) für eine Greifvorrichtung (50) mit Mitteln (81, 82), die eingerichtet sind, das Verfahren (100) gemäß Anspruch 9 oder 10 durchzuführen.

12. Verwendung einer Sensorvorrichtung (1) nach einem der Ansprüche 1 bis 6 als taktiler Entfernungssensor in oder an einer Sensorhaut in der Robotik.

## Claims

1. Sensor device (1), in particular for a gripping device (50) or a robot, having a first tactile sensor (10), which is configured to determine a force acting between the sensor device (1) and an object (70), having a second capacitive sensor (20), which is configured to determine a distance (61, 62, 63) between the sensor device (1) and the object (70), wherein the first sensor (10) comprises a first layer (11) and a second layer (12) composed of a conductive material,
wherein the second sensor (20) has a layer (21), wherein the layer (21) comprises a first subregion (22) and a third subregion (24) composed of a conductive material and a second subregion (23) composed of a dielectric, which is arranged, in particular concentrically, between the first subregion (22) and the third subregion (24),
**characterized in that**
a third layer (13) composed of a piezoelectric material is arranged between the first layer (11) and the second layer (12) of the first sensor (10).

2. Sensor device (1) according to Claim 1, **characterized in that** at least the first sensor (10) and/or the second sensor (20) are/is designed to be substantially flat, in particular as a flexible multilayer system, and are arranged one above the other.

3. Sensor device (1) according to Claim 1 or 2, **characterized in that** the first sensor (10) and the second sensor (20) have at least one common sensor element.

4. Sensor device (1) according to Claim 1, **characterized in that** the third layer (13) contains polyvinylidene fluoride (14).

5. Sensor device (1) according to any of the preceding claims, **characterized in that** the first layer (11) or the second layer (12) of the first sensor (10) comprises, at least in regions, the first subregion (22) and/or the third subregion (24) of the layer of the second sensor (20).

6. Sensor device (1) according to Claim 2, **characterized in that** the second sensor (20) has an electrically insulating film (30) on a side facing away from the first sensor (10).

7. Gripping device (50), in particular for a robot, having a sensor device (1) according to any of the preceding claims.

8. Gripping device (50) according to Claim 7, **characterized in that** the gripping device (50) has at least two gripping elements (51, 52, 53) which are movable relative to one another and at least two sensor devices (1) according to one of Claims 1 to 6, wherein at least one sensor device (1) is arranged on each gripping element (51, 52, 53) in such a way that the sensor device (1) is oriented in the direction of the object (70) to be gripped during a gripping operation.

9. Method (100) for orienting a gripping device (50) according to Claim 7 or 8 with respect to an object (70) to be gripped and applying a force to the gripping device (50), comprising the steps of:
- orienting (101) a first sensor device (1) arranged on a gripping element (51) of the gripping device (50) in the direction of the object (70) to be gripped;
- detecting (102) a first distance (61) between the first sensor device (1) and the object with the first sensor device (1);
- moving (103) the gripping element (51) closer to the object (70) depending on the detected first distance (61) in such a way that the gripping element (51) comes into contact with the object (70);
- adjusting (104) the force acting on the object by the gripping element depending on measurement data (K1) from a first sensor (10) of the sensor device (1).

10. Method (100) according to Claim 9, **characterized in that**, in the orienting step (101), at least one second sensor device (1) arranged on at least one second gripping element (52, 53) of the gripping device (50) is oriented in the direction of the object (70); in the detecting step (102), at least one second distance (62, 63) between the second sensor device (1) and the object (70) is detected; in the moving-closer step (103), the at least two gripping elements (51, 52, 53) are moved closer to the object (70) depending on the detected first distance (61) and the detected second distance (62, 63) in such a way that the two gripping elements (51, 52, 53) come into contact with the object (70) substantially simultaneously; and in the adjusting step (104), the force acting on the object (70) by the two gripping elements (51, 52, 53) is adjusted depending on measurement data (K1) from the respectively first sensor (10) of the two sensor devices (1).

11. Control unit (80) for a gripping device (50) having means (81, 82) which are configured to carry out the method (100) according to Claim 9 or 10.

12. Use of a sensor device (1) according to any of Claims 1 to 6 as a tactile distance sensor in or on a sensor skin in robotics.

## Revendications

1. Dispositif capteur (1), notamment pour un dispositif de préhension (50) ou un robot, possédant un premier capteur tactile (10), lequel est conçu pour déterminer une force agissant entre le dispositif capteur (1) et un objet (70), comprenant un deuxième capteur capacitif (20), lequel est conçu pour déterminer une distance (61, 62, 63) entre le dispositif capteur (1) et l'objet (70), le premier capteur (10) possédant une première couche (11) et une deuxième couche (12) composées d'un matériau conducteur,
le deuxième capteur (20) possédant une couche (21), la couche (21) comportant une première zone partielle (22) et une troisième zone partielle (24) composées d'un matériau conducteur et une deuxième zone partielle (23) composée d'un diélectrique, laquelle est disposée, notamment de manière concentrique, entre la première zone partielle (22) et la troisième zone partielle (24),
**caractérisé en ce**
**qu'**une troisième couche (13) composée d'un matériau piézoélectrique est disposée entre la première couche (11) et la deuxième couche (12) du premier capteur (10).

2. Dispositif capteur (1) selon la revendication 1, **caractérisé en ce qu'**au moins le premier capteur (10) et/ou le deuxième capteur (20) est/sont configuré(s) de manière essentiellement plane, notamment sous la forme d'un système multicouche flexible, et est/sont disposé(s) l'un au-dessus de l'autre.

3. Dispositif capteur (1) selon la revendication 1 ou 2, **caractérisé en ce que** le premier capteur (10) et le deuxième capteur (20) possèdent au moins un élément capteur commun.

4. Dispositif capteur (1) selon la revendication 1, **caractérisé en ce que** la troisième couche (13) présente du poly(fluorure de vinylidène) (14).

5. Dispositif capteur (1) selon l'une des revendications précédentes, **caractérisé en ce que** la première couche (11) ou la deuxième couche (12) du premier capteur (10) comporte au moins par zones la première zone partielle (22) et/ou la troisième zone partielle (24) de la couche du deuxième capteur (20).

6. Dispositif capteur (1) selon la revendication 2, **caractérisé en ce que** le deuxième capteur (20) possède un film électriquement isolant (30) sur un côté opposé au premier capteur (10).

7. Dispositif de préhension (50), notamment pour un robot, comprenant un dispositif capteur (1) selon l'une des revendications précédentes.

8. Dispositif de préhension (50) selon la revendication 7, **caractérisé en ce que** le dispositif de préhension (50) possède au moins deux éléments de préhension (51, 52, 53) mobiles l'un par rapport à l'autre et au moins deux dispositifs capteurs (1) selon l'une des revendications 1 à 6, au moins un dispositif capteur (1) étant disposé sur chaque élément de préhension (51, 52, 53) de telle sorte que le dispositif capteur (1) soit orienté en direction de l'objet à saisir (70) lors d'une opération de préhension.

9. Procédé (100) pour orienter un dispositif de préhension (50) selon la revendication 7 ou 8, vers un objet (70) à saisir et appliquer une force au dispositif de préhension (50), comprenant les étapes suivantes :
- orientation (101) d'un premier dispositif capteur (1) disposé sur un élément de préhension (51) du dispositif de préhension (50) en direction de l'objet (70) à saisir ;
- détection (102) d'une première distance (61) entre le premier dispositif capteur (1) et l'objet avec le premier dispositif capteur (1) ;
- approche (103) de l'élément de préhension (51) de l'objet (70) en fonction de la première distance (61) détectée, de telle sorte que l'élément de préhension (51) entre en contact avec l'objet (70) ;
- adaptation (104) de la force exercée par l'élément de préhension sur l'objet en fonction de données de mesure (K1) d'un premier capteur (10) du dispositif capteur (1).

10. Procédé (100) selon la revendication 9, **caractérisé en ce qu'**à l'étape d'orientation (101), au moins un deuxième dispositif capteur (1), disposé sur au moins un deuxième élément de préhension (52, 53) du dispositif de préhension (50), est orienté en direction de l'objet (70) ; à l'étape de détection (102), au moins une deuxième distance (62, 63) entre le deuxième dispositif capteur (1) et l'objet (70) est détectée ; à l'étape d'approche (103), les au moins deux éléments de préhension (51, 52, 53) sont approchés de l'objet (70) en fonction de la première distance (61) détectée et de la deuxième distance (62, 63) détectée, de telle sorte que les deux éléments de préhension (51, 52, 53) entrent en contact avec l'objet (70) sensiblement en même temps ; et dans l'étape d'adaptation (104), la force agissant sur l'objet (70) par les deux éléments de préhension (51, 52, 53) est adaptée en fonction de données de mesure (K1) du premier capteur respectif (10) des deux dispositifs capteurs (1).

11. Unité de commande (80) pour un dispositif de préhension (50) comprenant des moyens (81, 82), qui sont adaptés pour mettre en œuvre le procédé (100) selon la revendication 9 ou 10.

12. Utilisation d'un dispositif capteur (1) selon l'une des revendications 1 à 6 en tant que capteur de distance tactile dans ou sur une peau de détection en robotique.
